# EUROPÄISCHE PATENTSCHRIFT

(11) **EP 3 083 371 B1**
(45) Veröffentlichungstag und Bekanntmachung des Hinweises auf die Patenterteilung: **14.02.2018**
(21) Anmeldenummer: 14796531.3
(22) Anmeldetag: 13.11.2014
(51) Int. Cl.: B62D 21/10, B62D 21/15, F16F 1/368, B60G 11/08, B60G 21/05

(54) **ACHSANORDNUNG FÜR EIN FAHRZEUG**
SUSPENSION CONFIGURATION FOR A VEHICLE
CONFIGURATION DE SUSPENSION POUR UN VÉHICULE

(30) Priorität: 16.12.2013 DE 102013226123
(43) Veröffentlichungstag der Anmeldung: 26.10.2016
(73) Patentinhaber: Bayerische Motoren Werke Aktiengesellschaft, 80809 München (DE)
(72) Erfinder: GERBER, Sven, 80807 München (DE); STÖRK, Kai-Uwe, 82234 Wessling (DE)
(74) Vertreter: Schmidt, Günter H. H.
(86) Internationale Anmeldenummer: PCT/EP2014/074534
(87) Internationale Veröffentlichungsnummer: WO 2015/090750

(56) Entgegenhaltungen:
- EP-A1- 2 477 825
- EP-B1- 0 941 912
- DE-A1- 10 237 658
- DE-A1-102010 042 222
- DE-A1-102011 077 336
- DE-T2- 69 002 316
- US-A1- 2003 122 338

## Beschreibung

Vorliegende Erfindung betrifft ein Kraftfahrzeug mit einer Achsanordnung nach dem Oberbegriff des Anspruchs 1. Die Achsanordnung kann dabei als Vorderachse oder Hinterachse in einem Kraftfahrzeug mit vier Rädern verwendet werden. Zum Stand der Technik wird neben der US 2003/0122338 A1 oder der DE 10 2010 042 222 A1 beispielshalber auf die EP 0 941 912 B1 und auf die EP 2 477 825 B1 verwiesen.

Allgemein sind im Stand der Technik Achsanordnungen mit Querblattfedern bekannt. Eine solche Querblattfeder erstreckt sich dabei in Fahrzeugquerrichtung zwischen zwei Radträgern. Wenn eine solche Querblattfeder faserverstärktem Kunststoff, insbesondere in kohlefaserverstärktem Kunststoff oder glasfaserverstärktem Kunststoff, ausgeführt ist, ergibt sich sowohl eine stabile als auch leichtbauende Querblattfeder. Bekannt ist es darüber hinaus, solche Kunststoff-Querblattfedern aus verschiedenen Gründen gegabelt auszuführen, d.h. derart zu gestalten, dass diese im Mittenbereich zwischen den beiden Radträgern zumindest zwei voneinander beabstandete hier sog. Gurte aufweist, welche im Endbereich der Querblattfeder bzw. spätestens in deren Verbindungsabschnitten mit den Radträgern zusammengeführt sind.

Weiterer Stand der Technik im Bereich von Fahrzeug-Achsanordnungen sind die sog. Schubfelder, vgl. hierzu beispielsweise die eingangs letztgenannte EP 0 941 912 B1, welche der Karosseriestruktur bzw. dem Aufbau des Fahrzeugs im Achsbereich (und somit dort, wo auch Kräfte zwischen dem Fahrzeug-Aufbau und der Fahrbahn, auf welcher sich das Fahrzeug bewegt, übertragen werden, sowie ggf. Kräfte aus einem Aufprall des Fahrzeugs auf einem Hindernis zu übertragen sind) eine erhöhte Steifigkeit bzw. Festigkeit verleihen. Hierfür sind diese sich in Fzg.-Querrichtung üblicherweise zwischen den beiden Randbereichen des Fahrzeug-Aufbaus erstreckenden Schubfelder, die auch in Fahrzeug-Längsrichtung betrachtet eine die eigentliche Achsanordnung überdeckende Erstreckung aufweisen, geeignet fest (starr) mit dem Fahrzeug-Aufbau, vorzugsweise mit Trägern desselben, verbunden.

Hiermit soll für eine Achsanordnung nach dem Oberbegriff des Anspruchs 1 eine vereinfachte Gestaltung für eine für eine möglichst steife Aufbau- bzw. Karosseriestruktur im Bereich dieser Achsanordnung aufgezeigt werden (= Aufgabe vorliegender Erfindung).

Die Lösung der Aufgabe ist dadurch gekennzeichnet, dass die Querblattfeder zumindest anteilig in ein Schubfeld integriert ist, welches sich zwischen den beiden Radträgern erstreckt und beidseitig fest mit dem Aufbau oder der Karosserie des Fahrzeug verbunden ist sowie in Fahrzeug-Längsrichtung betrachtet über die Querblattfeder hinaus ragt. Vorteilhafte Aus- und Weiterbildungen sind Inhalt der Unteransprüche.

Die Erfindung umfasst somit eine Achsanordnung für ein Fahrzeug mit zwei gegenüberliegenden Radträgern, die über Lenker mit einer Karosserie bzw. dem Fahrzeug-Aufbau verbunden sind. Der Begriff "Karosserie" oder "Aufbau" ist hier weit gefasst und beinhaltet beispielsweise auch einzelne Baugruppen, wie Hinterachsträger oder Längs- oder Querträger des Fahrzeugs. Des Weiteren umfasst eine erfindungsgemäße Achsanordnung eine mit beiden Radträgern verbundene Querblattfeder. Die Querblattfeder erstreckt sich in etwa in Fahrzeugquerrichtung und ist einteilig ausgebildet. Die verwendete Querblattfeder weist zwei voneinander beabstandete Gurte auf. Es ist vorgesehen, dass die Gurte zu den Enden der Querblattfeder, also zu den Verbindungspunkten mit den Radträgern, zusammenlaufen. Durch die Verwendung der Querblattfeder mit zwei beabstandeten Gurten entsteht zwischen den beiden Gurten ein Freiraum.

Weiterhin erstreckt sich quasi zwischen den beiden Radträgern ein Schubfeld. Das Schubfeld ist beidseitig mit dem Fahrzeug-Aufbau verbunden. Insbesondere erstreckt sich das Schubfeld in der horizontalen Ebene. Erfindungsgemäß ist die vorstehend genannte und die beiden Radträger miteinander verbindende Querblattfeder zumindest teilweise in das Schubfeld integriert. Das heißt, dass durch entsprechende Ausbildung des Materials und/oder der Geometrie des Schubfeldes ein Bestandteil des Schubfeldes als Querblattfeder wirkt.

Bevorzugt ist vorgesehen, dass das Schubfeld und die Querblattfeder aus faserverstärktem Kunststoff gefertigt sind. Insbesondere wird glasfaserverstärkter Kunststoff oder kohlefaserverstärkter Kunststoff verwendet. Die Querblattfeder kann dabei zumindest teilweise als Materialdickung im Schubfeld ausgebildet sein. Das heißt, die Querblattfeder erhebt sich vom restlichen Bestandteil des Schubfeldes, insbesondere in einer vertikalen Richtung. Die Querblattfeder weist zumindest zwei voneinander beabstandete Gurte auf. Durch die mehreren in Fahrzeugquerrichtung verlaufenden Gurte kann die Querblattfeder durch mehrere Materialdickungen auf dem Schubfeld verteilt werden. Dabei muss aber nicht das Schubfeld zusammen mit der Querblattfeder einteilig gestaltet sein, jedoch sollten diese beiden Elemente auch zur Montageerleichterung ein zusammenhängendes Bauteil bilden. Hierfür kann die Querblattfeder auf das Schubfeld, welches nicht zwangsweise in Kunststoff ausgeführt sein muss, geeignet auflaminiert sein. Die Querblattfeder kann dabei auf der Oberseite und/oder Unterseite des Schubfeldes auflaminiert sein. Die Ausbildung der Querblattfeder in faserverstärktem Kunststoff, insbesondere in kohlefaserverstärktem oder glasfaserverstärktem Kunststoff, ermöglicht dabei sowohl eine stabile als auch leichtbauende Querblattfeder.

Nunmehr auf den weiter oben genannten Freiraum zwischen den sog. Gurten der "gegabelten" Querblattfeder eingehend kann dieser Freiraum für weitere Bestandteile des Fahrzeugs, beispielsweise von dessen Antriebsstrang, genutzt werden. Die Querblattfeder liegt insbesondere in einer horizontalen Ebene. Dementsprechend erstreckt sich auch ein zwischen zwei Gurten der Querblattfeder ausgebildete Freiraum in einer horizontalen Ebene. Um den Freiraum für weitere Bestandteile des Fahrzeugs nutzen zu können, kann der besagte Freiraum eine geeignete Größe aufweisen. Wenn der Freiraum in Fahrzeugquerrichtung eine erste Breite aufweist und die gesamte Querblattfeder in Fahrzeugquerrichtung eine zweite Breite aufweist, so ist hierzu weiterhin vorgeschlagen, dass die erste zumindest 60%, vorzugsweise zumindest 70% der zweiten Breite beträgt. Wenn der besagte Freiraum in Fahrzeuglängsrichtung eine erste Länge aufweist und die gesamte Querblattfeder an ihrer längsten Stelle in Fahrzeuglängsrichtung eine zweite Länge aufweist, so kann im Hinblick auf einen ausreichend großen Freiraum die erste Länge zumindest 40%, vorzugsweise zumindest 50% der zweiten Länge betragen. Bevorzugt ragt zwischen den beiden Gurten der Querblattfeder eine elektrische Maschine zumindest anteilig hinein. Betrachtet man die Achsanordnung in einem zur Horizontalen senkrechten Schnitt, so liegt zumindest ein Anteil der genannten elektrischen Maschine zwischen zwei bzw. den beiden Gurten der Querblattfeder. Die elektrische Maschine ist insbesondere ein Elektromotor zum Antrieb des Fahrzeugs. Bevorzugt kann die elektrische Maschine auch generatorisch betrieben werden. Bei der Anordnung der elektrischen Maschine ist es bevorzugt vorgesehen, dass die Ankerwelle der elektrischen Maschine in etwa mit den Naben der Räder des Fahrzeugs fluchtet. Dementsprechend ist eine Ankerwelle der elektrischen Maschine zur Drehmomentübertragung auf zumindest eines der Räder ausgebildet. Insbesondere kann vorgesehen sein, dass die elektrische Maschine zwischen den beiden Radträgern angeordnet ist und beidseitig der elektrischen Maschine je eine Ankerwelle zu den Radträgern und somit zu den Rädern führt.

Eine erfindungsgemäße Querblattfeder kann sowohl radführend als auch nicht-radführend mit den Radträgern verbunden sein. Für die radführende Anordnung ist vorgesehen, dass die Enden der Querblattfeder fest mit dem jeweiligen Radträger verbunden sind. Insbesondere sind dann noch drei weitere Lenker vorgesehen, um den einzelnen Radträger mit der Karosserie zu verbinden. Bei einer nicht-radführenden Anordnung der Querblattfeder können die Enden der Querblattfeder vorzugsweise über Verbindungselemente, die wie Pendelstützen wirken, mit den Radträgern verbunden sein. Beispielsweise sind dann fünf Lenker vorgesehen, um den Radträger mit der Karosserie zu verbinden. Indem die erfindungsgemäße Querblattfeder mit Fortsätzen seitlich über das Schubfeld übersteht, können solche Fortsätze der Querblattfeder die Anbindung der Querblattfeder an die Radträger bilden. Hierfür sind besagte Fortsätze entweder fest mit den Radträgern oder im Falle der nicht-radführenden Anordnung über Verbindungselemente, die wie Pendelstützen wirken, mit den Radträgern verbunden.

Weitere Einzelheiten ergeben sich aus der nachfolgenden Beschreibung und den Figuren. Es zeigen jeweils auf das Wesentliche abstrahiert
- Fig. 1 - 2: eine erfindungsgemäße Achsanordnung eines Kraftfahrzeugs gemäß einem ersten Ausführungsbeispiel in verschiedenen räumlichen Darstellungen,
- Figur 3: eine Abwandlung des ersten Ausführungsbeispiels, wobei hier die Räder nicht gezeigt sind
- Figur 4: nur ein Schubfeld mit daran vorgesehener Querblattfeder,
- Figur 5: eine weitere Abwandlung des ersten Ausführungsbeispiels in einer Darstellung ähnlich Fig.3
- Fig. 6 - 8: eine weitere erfindungsgemäße Kraftfahrzeug-Achsanordnung mit einer in einen sog. Freiraum der Querblattfeder anteilig hinein ragenden Maschine, wobei hier der Übersichtlichkeit halber ein bzw. das Schubfeld nicht dargestellt ist.

In sämtlichen Figuren sind gleiche bzw. funktional gleiche Bauteile dabei mit denselben Bezugszeichen versehen.

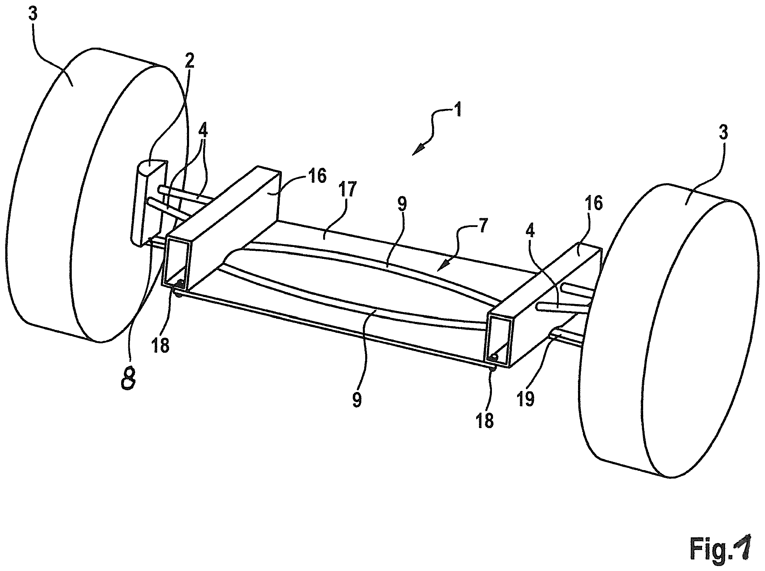

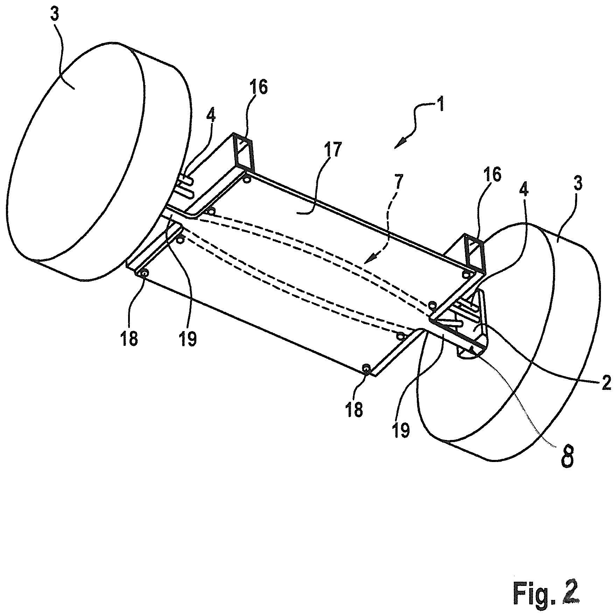

Figur 1 zeigt in einer räumlichen Ansicht von schräg oben und Fig.2 in einer räumlichen Ansicht von schräg unten eine Achsanordnung 1 eines zweispurigen Fahrzeugs gemäß einem ersten Ausführungsbeispiel. Die Achsanordnung 1 umfasst - wie grundsätzlich üblich - einen linksseitigen und einen rechtsseitigen (und somit zwei) Radträger 2, an denen jeweils ein Rad 3 befestigt ist. Die Achsanordnung 1 wird entweder als Vorderachse oder als Hinterachse eines Kraftfahrzeugs verwendet. Die Radträger 2 sind über mehrere Lenker 4 gelenkig mit dem Fahrzeug-Aufbau 16 (hier durch einen Karosserie-Längsträger dargestellt) verbunden.

Die Achsanordnung 1 umfasst weiterhin ein sog. Schubfeld 17, das über mehrere Karosserieverbindungspunkte 18 mit der Karosserie 16 verbunden ist. Bei einem Schubfeld (17) handelt es sich bekanntlich um ein ggf. auch mehrlagiges im wesentlichen plattenförmiges Versteifungselement, das insbesondere im Bereich der Fahrzeug-Achsen insbesondere bei Personenkraftwagen vorgesehen sein kann. Das Schubfeld 17 erstreckt sich im Wesentlichen in einer horizontalen Ebene in Fzg.-Querrichtung betrachtet zwischen den seitlichen Rändern des Fahrzeug-Aufbaus und ragt in Fzg.-Längsrichtung betrachtet (diese verläuft parallel zur Ebene des Schubfelds 17 senkrecht zu einer Verbindungslinie der Mittelpunkte der beiden Räder 3) üblicherweise über die eigentliche durch die radführenden Lenker 4 definierte Fahrzeug-Achse hinaus. Vorliegend ist das Schubfeld in faserverstärktem Kunststoff ausgeführt.

Des Weiteren umfasst die Achsanordnung 1 eine sich in Fzg.-Querrichtung erstreckende Querblattfeder 7. Deren Enden 8 sind in Form von Fortsätzen 19 beim ersten Ausführungsbeispiel radführend mit den Radträgern 2 verbunden. Die Querblattfeder 7 ist einstückig aus faserverstärktem Kunststoff gefertigt, wobei sich diese im Bereich zwischen den Enden in vorliegend zwei Gurte 9 aufteilt. Die beiden Gurte 9 laufen zu den Enden 8 der Querblattfeder 7 hin zusammen.

Die Querblattfeder 7 ist zumindest teilweise in das Schubfeld 17 integriert. Beim ersten Ausführungsbeispiel ist hierfür die zwei (oder was nicht dargestellt ist mehrere) Gurte 9 aufweisende Querblattfeder 7 auf das Schubfeld 17 bzw. dessen Oberseite auflaminiert. Daher sind die Gurte 9 in Fig.1 sichtbar und in Figur 2 nicht sichtbar und deshalb gestrichelt dargestellt. Es kann aber auch die Querblattfeder 7 zusammen mit ihren Fortsätzen 19 und dem Schubfeld 17 einstückig aus faserverstärktem Kunststoff gefertigt sein. Wie aus den Figuren 1, 2 hervorgeht sind die genannten Fortsätze 19 bzw. deren Endeabschnitte 8 der Querblattfeder 7 in radführender Weise (und somit starr) mit dem jeweils zugeordneten Radträger 2 verbunden.

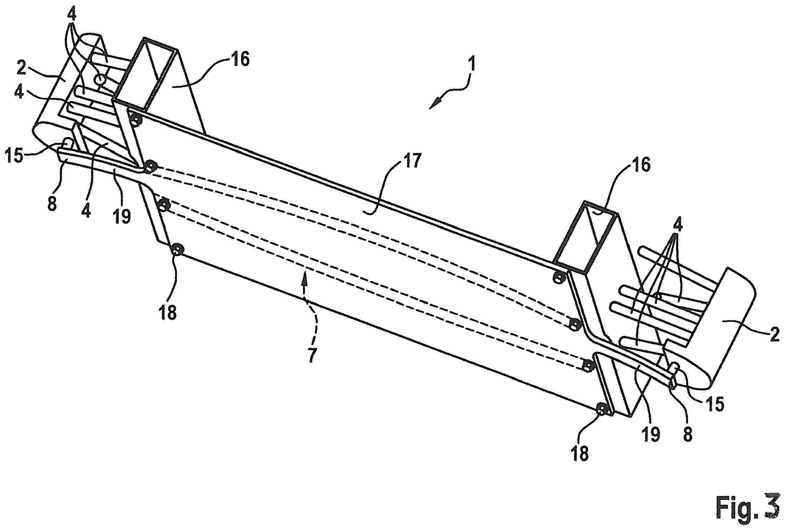

Fig.3 zeigt eine Abwandlung des ersten Ausführungsbeispiels in einer Ansicht von schräg unten, wonach hier die Fortsätze 19 der Querblattfeder 7 nicht-radführend mit den Radträgern 2 verbunden sind. Vielmehr sind die Enden 8 der Fortsätze 19 über Verbindungselemente 15, die wie bzw. als Pendelstützen wirken, mit den Radträgern 2 verbunden. Für die Radführung sind hier fünf Lenker 4 vorgesehen, die mit dem Fahrzeug-Aufbau 16 gelenkig verbunden sind.

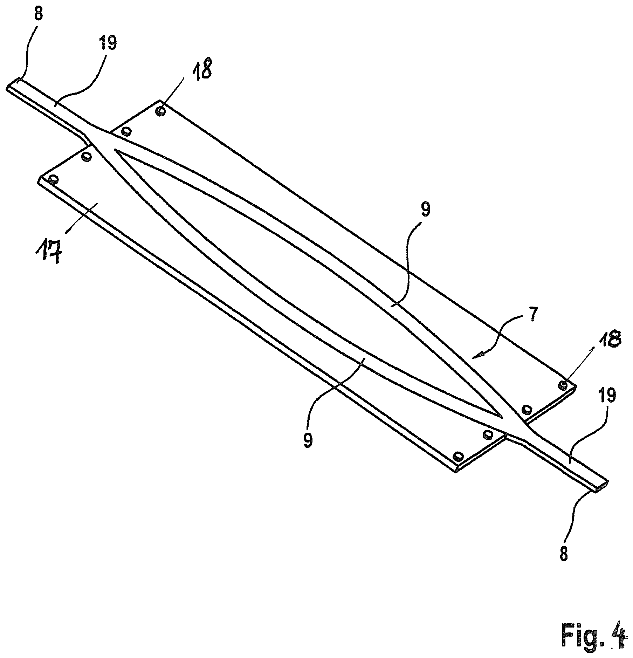

Fig.4 zeigt lediglich ein Schubfeld 17 mit einer integrierten, bspw. in Form einer Materialverdickung in Richtung senkrecht zur Ebene des Schubfelds 17 ausgeführten und zwei Gurte 9 aufweisenden Querblattfeder 7.

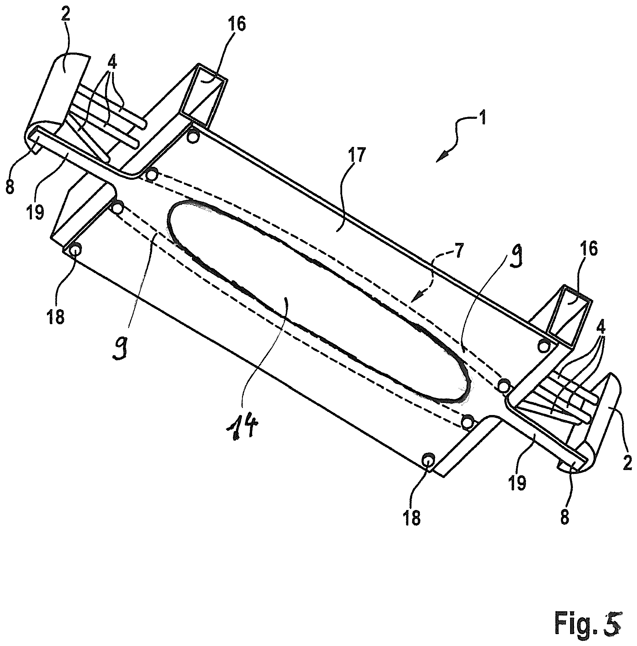

Beim Ausführungsbeispiel nach Fig.5 ist in einer räumlichen Ansicht von schräg unten ein Freiraum 14 zwischen den beiden Gurten 9 der Querblattfeder 7 vorgesehen, welche - da sie sich analog Fig.4 auf der Oberseite des Schubfelds 17 befinden - nur gestrichelt dargestellt sind. Dieser Freiraum 14 ist als Durchbruch im Schubfeld 17 ausgebildet, d.h. der Freiraum 14 stellt praktisch ein Loch im Schubfeld 14 dar, dessen Rand über einen weiten Bereich durch Randabschnitte der Gurte 9 gebildet ist.

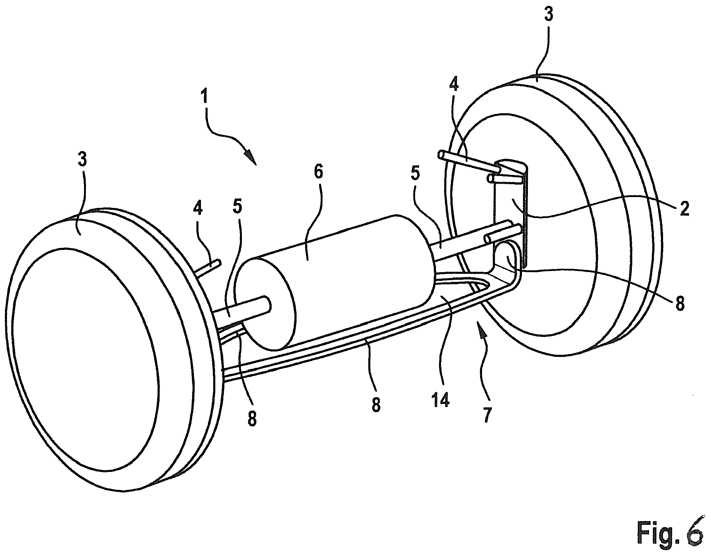

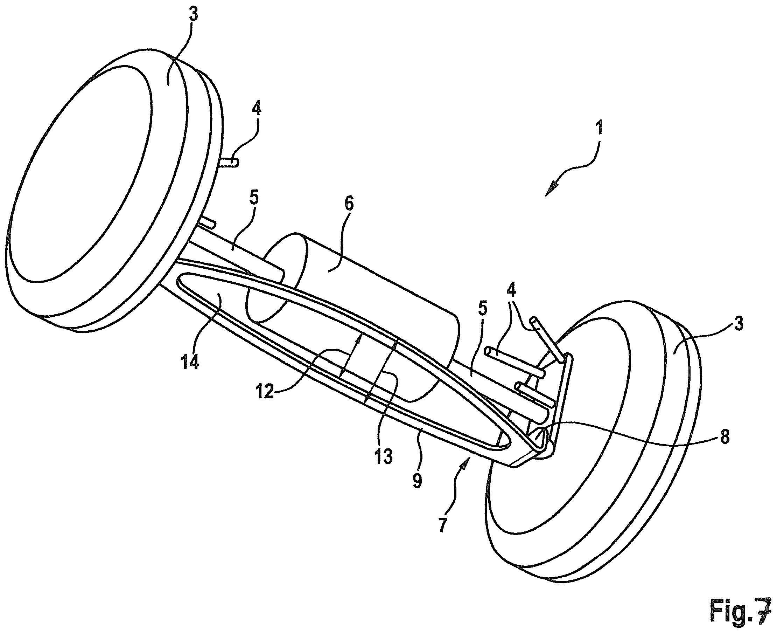

Wie Figur 6 (räumliche Ansicht von schräg oben) und Figur 7 (räumliche Ansicht von schräg unten) zeigen, in denen das Schubfeld 17 nicht dargestellt ist, kann nach einem weiteren Ausführungsbeispiel zwischen den beiden Radträgern 2 eine elektrische Maschine 6 vorgesehen sein, die zum Antrieb des Fahrzeugs verwendet wird. Die elektrische Maschine 6 weist eine Ankerwelle 5 auf, die beidseitig der elektrischen Maschine 6 zu den Rädern 3 führt. Die Ankerwelle 5 der elektrischen Maschine 6 ist in etwa auf Höhe der Naben der Räder 3 angeordnet. Wie ersichtlich ragt die elektrische Maschine 6 zumindest teilweise in den vorstehend erläuterten Freiraum 14, der zwischen den beiden Gurten 9 der Querblattfeder im nicht dargestellten Schubfeld vorgesehen ist, hinein.

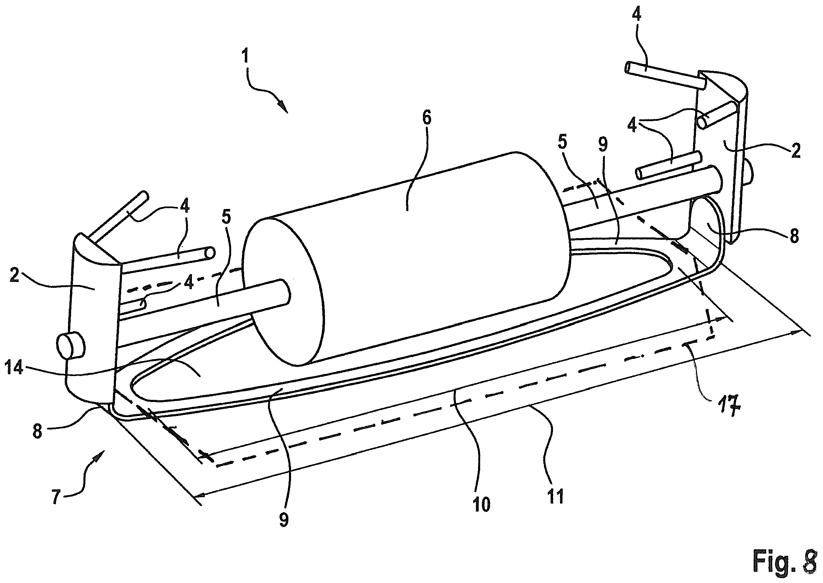

Um einen ausreichend großen Freiraum 14 zu erhalten, sind bevorzugt folgende Größenverhältnisse vorgesehen: Gemäß Figur 8, die eine Detaildarstellung von Fig.6 ist, weist der Freiraum 14 in Fahrzeugquerrichtung gemessen eine erste Breite 10 auf. Die gesamte Querblattfeder 7 weist eine zweite Breite 11 auf. Die erste Breite 10 beträgt zumindest 60% der zweiten Breite 11. Dadurch ist ein ausreichend großer Freiraum 14 in Fahrzeugquerrichtung gegeben.

Gemäß Figur 7 erstreckt sich der Freiraum 14 in Fahrzeuglängsrichtung über eine erste Länge 12. An der größten Stelle weist die gesamte Querblattfeder 7 in Fahrzeuglängsrichtung eine zweite Länge 13 auf. Diese erste Länge 12 beträgt zumindest 40% der zweiten Länge 13, so dass der Freiraum 14 auch in Fahrzeuglängsrichtung ausreichend groß zur Aufnahme der elektrischen Maschine 6 ist. In dieser Figur 8 ist weiterhin mit gestrichelten Linien äußerst abstrahiert das Schubfeld 17 dargestellt, auf welchem die Querblattfeder 17 auflaminiert ist. Selbstverständlich erstreckt sich der Freiraum 14 durch das Schubfeld 17 hindurch bzw. ist auch in diesem vorgesehen.

## Patentansprüche

1. Kraftfahrzeug mit einer Achsanordnung, umfassend zwei gegenüberliegende Radträger (2), die über Lenker (4) mit einer Karosserie des Kraftfahrzeugs verbindbar sind, und eine mit beiden Radträgern (2) verbundene Querblattfeder (7), die einteilig in faserverstärktem Kunststoff gefertigt ist und zumindest zwei voneinander beabstandete Gurte (9) aufweist,
**dadurch gekennzeichnet, dass** die Querblattfeder (7) zumindest anteilig in ein Schubfeld (17) integriert ist, welches sich zwischen den beiden Radträgern (2) erstreckt und beidseitig fest mit dem Aufbau (16) oder der Karosserie des Fahrzeugs verbunden ist sowie in Fahrzeug-Längsrichtung betrachtet über die Querblattfeder (7) hinaus ragt.

2. Kraftfahrzeug nach Anspruch 1, wobei das Schubfeld (17) aus faserverstärktem Kunststoff gefertigt und die Querblattfeder (7) als Materialdickung im Schubfeld (17) ausgebildet ist.

3. Kraftfahrzeug nach Anspruch 1, wobei die Querblattfeder (7) auf das Schubfeld (17) auflaminiert ist.

4. Kraftfahrzeug nach einem der vorangegangenen Ansprüche, wobei die Querblattfeder (7) mit Fortsätzen (19) seitlich über das Schubfeld (17) übersteht und die besagten Fortsätze (19) mit den Radträgern (2) verbunden sind.

5. Kraftfahrzeug nach einem der vorangegangenen Ansprüche, wobei zwischen den beiden Gurten (9) ein Freiraum (14) liegt, dessen Breite in Fahrzeugquerrichtung zumindest 60% der Breite der gesamte Querblattfeder (7) in Fahrzeugquerrichtung beträgt, und dessen Länge in Fahrzeuglängsrichtung eine erste Länge (12) aufweist, wobei die gesamte Querblattfeder (7) in Fahrzeuglängsrichtung zumindest 40% der in Fahrzeuglängsrichtung gemessenen Erstreckung der Querblattfeder (7) beträgt.

6. Kraftfahrzeug nach einem der vorhergehenden Ansprüche, wobei eine elektrische Maschine (6) in den Freiraum (14) zwischen den beiden Gurten (9) der Querblattfeder (7) hinein ragt.

## Claims

1. A motor vehicle with an axle arrangement, comprising two opposite wheel carriers (2), which can be connected to a body of the motor vehicle by means of suspension links (4), and a transverse leaf spring (7), which is connected to both wheel carriers (2) and is manufactured in one piece from fibre-reinforced plastic and has at least two strips (9) spaced apart from one another,
**characterised in that** the transverse leaf spring (7) is integrated at least proportionately in a shear field (17), which extends between the two wheel carriers (2) and is fixedly connected on both sides to the structure (16) or the body of the vehicle and protrudes beyond the transverse leaf spring (7) as considered in the vehicle longitudinal direction.

2. A motor vehicle according to claim 1, wherein the shear field (17) is manufactured from fibre-reinforced plastic and the transverse leaf spring (7) is formed as a material thickening in the shear field (17).

3. A motor vehicle according to claim 1, wherein the transverse leaf spring (7) is laminated onto the shear field (17).

4. A motor vehicle according to anyone of the preceding claims, wherein the transverse leaf spring (7) protrudes laterally beyond the shear field (17) by means of extensions (19), and said extensions (19) are connected to the wheel carriers (2).

5. A motor vehicle according to anyone of the preceding claims, wherein there is a free space (14) between the two strips (9) of the transverse leaf spring, the width of said free space in the vehicle transverse direction being at least 60% of the width of the entire transverse leaf spring (7) in the vehicle transverse direction, and the length of said free space in the vehicle longitudinal direction having a first length (12), wherein the entire transverse leaf spring (7) in the vehicle longitudinal direction is at least 40% of the extent of the transverse leaf spring (7) as measured in the vehicle longitudinal direction.

6. A motor vehicle according to any one of the preceding claims, wherein an electric machine (6) protrudes into the free space (14) between the two strips (9) of the transverse leaf spring (7).

## Revendications

1. Véhicule équipé d'un dispositif d'essieu comportant deux supports de roue (2) opposés l'un à l'autre susceptibles d'être reliés à la carrosserie du véhicule par l'intermédiaire de bras oscillant (4), ainsi qu'un ressort à lames transversal (7) relié aux deux supports de roue (2) qui est réalisé en une seule pièce dans un matériau synthétique renforcé par des fibres, et comporte au moins deux sangles (9) situées à distance l'une de l'autre,
**caractérisé en ce que**
le ressort à lames transversal (7) est intégré au moins partiellement dans un champ de poussée (17) qui s'étend entre les deux supports de roues (2), est relié solidairement de part et d'autre avec la structure (16) ou la carrosserie du véhicule, et, s'étend, dans la direction longitudinale du véhicule au-delà du ressort à lames transversal (7).

2. Véhicule conforme à la revendication 1,
dans lequel le champ de poussée (17) est réalisé en un matériau synthétique renforcé par des fibres et le ressort à lames transversal (7) est réalisé sous la forme d'un épaississement de matériau dans le champ de poussée (17).

3. Véhicule conforme à la revendication 1,
dans lequel le ressort à lames transversal (7) est stratifié sur le champ de poussée (17).

4. Véhicule conforme à l'une des revendications précédentes,
dans lequel le ressort à lames transversal (7) dépasse latéralement du champ de poussée (17) par des prolongements (19) qui sont reliés aux supports de roue (2).

5. Véhicule conforme à l'une des revendications précédentes,
**caractérisé en ce qu'**
entre les deux sangles (9) il y a un espace libre (14) dont la largeur dans la direction transversale du véhicule est égale à au moins 60% de la largeur de la totalité du ressort à lames transversal (7) dans la direction transversale du véhicule et dont la longueur dans la direction longitudinale du véhicule comporte une première longueur (12), la première longueur (12) dans la direction longitudinale du véhicule étant égale à au moins 40% de l'extension du ressort à lames transversal (7) mesurée dans la direction longitudinale du véhicule.

6. Véhicule conforme à l'une des revendications précédentes, dans lequel une machine électrique (6) pénètre dans l'intervalle libre (14) situé entre les deux courroies (9) du ressort à lames transversal (7).
